# EUROPÄISCHE PATENTSCHRIFT

(11) **EP 1 793 152 B1**
(45) Veröffentlichungstag und Bekanntmachung des Hinweises auf die Patenterteilung: **09.01.2013**
(21) Anmeldenummer: 06024817.6
(22) Anmeldetag: 30.11.2006
(51) Int. Cl.: F16L 25/01, F16L 53/00, H01R 13/00

(54) **Fluidkupplungsanordnung mit elektrischer Steckverbinderanordnung**
Fluid coupling device with electrical connector assembly
Dispositif de raccordement fluidique avec une assemblage de connecteur électrique

(30) Priorität: 02.12.2005 DE 102005057780
(43) Veröffentlichungstag der Anmeldung: 06.06.2007
(73) Patentinhaber: DBK David + Baader GmbH, 76870 Kandel/Pfalz (DE)
(72) Erfinder: Bauer, Hans-Peter, 76889 Klingenmünster (DE)
(74) Vertreter: Polte, Willi

(56) Entgegenhaltungen:
- EP-A2- 0 187 943
- WO-A-97/34339
- GB-A- 2 056 611
- US-A- 4 550 958
- US-A- 5 791 377
- US-A- 6 030 244
- US-A1- 2002 058 436

## Beschreibung

Die vorliegende Erfindung bezieht sich auf eine Fluidkupplungsanordnung, die mindestens ein erstes Kupplungsteil zum Verbinden einem ersten fluidführenden Element wie einer Fluidleitung und mindestens einem zweiten fluidführenden Element im Zusammenwirken mit mindestens einem zweiten Kupplungsteil aufweist, wobei ein Fluid zwischen dem ersten fluidführenden Element und dem mindestens einen zweiten fluidführenden Element durch die Fluidkupplungsanordnung strömt.

Die Erfindung bezieht sich weiterhin auf ein Fluidverteilungssystem in einem Kraftfahrzeug, das eine Fluidkupplungsanordnung gemäß der vorliegenden Erfindung verwendet.

In modernen Kraftfahrzeugen werden die vielfältigsten Fluide gefördert und verteilt, wie beispielsweise Reinigungsflüssigkeiten für die Scheiben- oder Scheinwerferreinigung, wässerige Hamstofflösungen im Zusammenhang mit der sogenannten SCR-Technologie (selective catalytic reduction), Kraftstoffe, aber auch Blowbygase. In der Förderkette dieser Fluide kann bei niedrigen Temperaturen die in der Förderkette enthaltene Flüssigkeit bzw. die in dem Gas enthaltene Feuchtigkeit einfrieren und es können Eisansätze vorkommen. Deshalb werden bei bekannten Anordnungen, die diese Fluide fördern, fluidführende Elemente der Förderkette, wie z. B. Pumpen oder Schläuche, beheizt, um das Einfrieren derselben zu verhindern.

In der Regel werden für eine solche Beheizung elektrische Heizvorrichtungen verwendet und es besteht das Problem, dass eine umfangreiche Verkabelung und aufwendige Verbindungstechnik insbesondere an den Schnittstellen zwischen einzelnen Fluidleitungen oder zwischen einer Fluidleitung und einer weiteren Komponente der Förderkette, wie einer Pumpe oder dergleichen, erforderlich sind.

Die US 4,550,958 bezieht sich auf ein drehbares Verbindungsstück zum Verbinden eines Staubsaugerschlauchs mit dem Staubsaugergehäuse. Der Staubsaugerschlauch ist mit einer elektrischen Leitung umwunden, welche zur elektrischen Versorgung einer elektrisch betriebenen Bürste dient. Daher weist das drehbare Verbindungsstück einen Steckverbinder zum Kontaktieren dieser Leitung auf und ist mit entsprechenden Gegenkontakten des Gehäuses versehen, die mit Schleifringen an dem Gehäusestutzen verbunden sind.

Die US 2002/058436 A1 bezieht sich auf einen Verbinder zum Verbinden von Schläuchen und Rohrleitungen einerseits und elektrischen Leitungen andererseits. Die elektrische Leitung steht aber in keinem unmittelbaren Zusammenhang mit dem Schlauch, sondern wird lediglich parallel zu diesem geführt. Insbesondere sind die Leitungen nicht zum Beheizen der Schläuche geeignet, sondern dienen der Überwachung, ob die fluidischen Verbindungen ordnungsgemäß geschlossen sind.

Die US 6,030,244 offenbart ein Verbindersystem, das einerseits Schlauchleitungen mechanisch miteinander verbindet und andererseits elektrische Steckverbindungen zum Kontaktieren von elektrischen Leitungen aufweist. Dabei sind die elektrischen Leitungen parallel zu den Schlauchleitungen geführt, um beispielsweise bei einem elektrisch gesteuerten pneumatischen Bremsensystem parallel mit dem Schlauch mitgeführt zu werden, dienen aber nicht der Beheizung des Schlauchs.

Die WO 97/34339 A bezieht sich auf ein Verbindersystem zum Verbinden von Schlauchleitungen, bei dem elektrische Kontakte beim Schließen der mechanischen Verbindung zusammengesteckt werden. Die parallel zu den Schlauchleitungen verlaufenden elektrischen Leiter dienen einer Leistungs- oder Signalversorgung.

Die GB 2 056 611 A bezieht sich auf ein Verbindungsstück zum Anschließen eines Staubsaugerschlauchs, mit dem gleichzeitig eine elektrische Verbindung zwischen einem an dem Schlauch entlang geführten Kabel einerseits und dem Motorgehäuse andererseits hergestellt wird. Gemäß dieser Druckschrift wird ein Kupplungsstück vorgeschlagen, das zur Verbindung des Schlauchs mit dem Motorgehäuse verwendet wird. Allerdings offenbart diese Druckschrift nicht das Vorsehen eines Heizdrahts und auch keinesfalls eine drehbare elektrische Kontaktierung.

Die US 5,791 377 offenbart eine elektrisch beheizte Schlauchleitung, beispielsweise zum Leiten von Wischwasser an eine Scheibenwischerdüse. Zwar zeigt die in dieser Druckschrift offenbarte Schlauchleitung Heizdrähte zum Beheizen des Schlauchs, aber diese Drähte werden nicht mit Hilfe eines Steckverbinders elektrisch kontaktiert, sondern über aufgeschobene Kontaktelemente, die im Inneren des Endstücks vorgesehen sind.

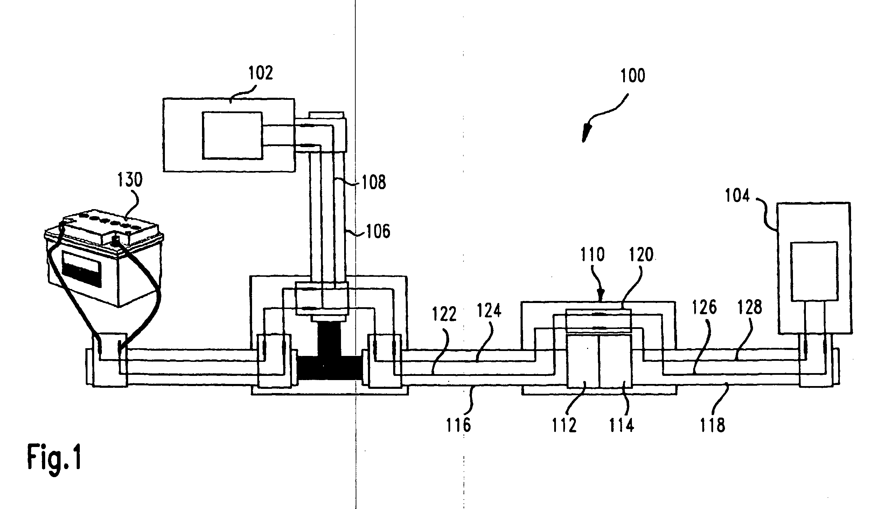

Aus der EP 0187943 A2 ist ein elektrischer Verbinder sowie eine fluidische Kupplung bekannt, die eine Verbindung zwischen einem beheizbaren Schlauch und einer Heißkleberpistole herstellen. Wie aus den Figuren 1 bis 3 und der zugehörigen Beschreibung ersichtlich, ist in der Hülle des Schlauchs eine Vielzahl von elektrischen Leitern enthalten, deren Enden mit Crimpanschlüssen versehen sind. Ein elektrischer Verbinder 24 nimmt diese Crimpanschlüsse auf und ermöglicht eine elektrische Verbindung zu einem weiteren elektrischen Steckverbinder 25, der über eine lose elektrische Leitung die Heißkleberpistole kontaktiert. Der fluidische Anschluss zwischen der Heißkleberpistole und dem beheizbaren Heißkleberschlauch erfolgt über eine konventionelle geschraubte Schlauchkupplung unabhängig von der elektrischen Steckverbindung.

Die Aufgabe, die der vorliegenden Erfindung zugrunde liegt, besteht darin, eine Fluidkupplungsanordnung und ein entsprechendes Fluidverteilungssystem anzugeben, das auf möglichst einfache und sichere Weise Elemente einer Fluidförderkette fluidisch wie auch elektrisch miteinander verbindet und einen sicheren Fluidfluss bei allen Betriebsbedingungen erlaubt.

Diese Aufgabe wird durch den Gegenstand der unabhängigen Patentansprüche gelöst. Vorteilhafte Weiterbildungen der vorliegenden Erfindung sind Gegenstand mehrerer Unteransprüche.

Dabei basiert die vorliegende Erfindung auf der Grundidee, dass die Fluidkupplungsanordnung mindestens eine elektrische Steckverbinderanordnung zum Verbinden mindestens einer ersten elektrischen Leitung mit mindestens einer zweiten elektrischen Leitung aufweist.

Auf diese Weise kann, beispielsweise beim Zusammenschließen von beheizbaren Schläuchen, erreicht werden, dass diese kombinierte fluidische und elektrische Verbindung auf eine besonders einfache Art und Weise montiert werden und auf zusätzliche Kabelbäume verzichtet werden kann. Weiterhin stellt die erfindungsgemäße Kupplungsanordnung auch unter den thermisch und mechanisch stark beanspruchenden Umgebungsbedingungen im Kraftfahrzeugbereich eine stabile und robuste Lösung dar.

Ein weiterer Vorteil der erfindungsgemäßen Lösung besteht darin, dass jedem Stromverbraucher die jeweils richtige Versorgungsspannung bereitgestellt werden kann.

Gemäß einer vorteilhaften Ausführungsform sind das erste Kupplungsteil und ein Steckverbinder der mindestens einen Steckverbinderanordnung in einem ersten elektrisch isolierenden Gehäuse aufgenommen. Eine solche integrierte Lösung ermöglicht es, dass beispielsweise beheizbare Schläuche mit vorkonfektionierten kombinierten elektrischen und fluidischen Anschlüssen versehen werden können.

Sieht man weiterhin vor, dass das zweite Kupplungsteil und ein zugehöriger Gegensteckverbinder der mindestens einen Steckverbinderanordnung in einem zweiten elektrisch isolierenden Gehäuse aufgenommen sind und dass das erste und zweite Gehäuse zusammensteckbar sind, um die fluidische und die elektrische Verbindung herzustellen, so ist die Kontaktierung sowohl der fluidischen wie auch der elektrischen Komponenten in einem Arbeitsschritt durchführbar. Damit sich die einmal geschlossene Verbindung nicht wieder unbeabsichtigt löst, kann gemäß einer vorteilhaften Ausführungsform eine Haltevorrichtung zum mechanischen Sichern der beiden Kupplungsteile aneinander in dem zusammengesteckten Zustand vorgesehen werden.

Insbesondere kann diese Haltevorrichtung durch mindestens einen Rastarm gebildet sein, der an einem der beiden Kupplungsteile angeordnet ist und mit einem an dem anderen Kupplungsteil angeordneten Rastvorsprung verrastbar ist. Selbstverständlich können aber auch andere bekannte Halte- und Verriegelungsvorrichtungen, wie beispielsweise eine Verschraubung und dergleichen zum Sichern der beiden Kupplungsteile aneinander verwendet werden.

Je nachdem, an welcher Stelle und für welchen Zweck die erfindungsgemäße Fluidkupplungsanordnung in einem Fluidverteilungssystem eingesetzt werden soll, ergeben sich verschiedene mögliche Formen für das erste Kupplungsteil. So kann das erste Kupplungsteil neben der Ausgestaltung als einfacher Verbinder mit einem zweiten Verbinder beispielsweise auch als ein Fitting in Form eines Durchgangskupplungsstücks (I-Stück), eines Winkelstücks (L-Stück) oder eines Abzweigstücks, das auch als T-Stück bezeichnet wird, ausgeführt sein. Weiterhin sind Verzweigungen für mehr als drei Anschlüsse möglich. Insbesondere im Fall des Abzweigstücks vereinfacht sich das Fluidverteilungssystem signifikant, wenn die benötigte Verteilung und Stromdurchleitung nicht in Form von loser Verkabelung außerhalb des Fluidsystems durchgeführt werden muss, sondern als integrierte Kupplungsanordnung realisiert ist.

Gemäß einer vorteilhaften Weiterbildung der vorliegenden Erfindung ist an dem ersten Kupplungsteil ein Schlauchanschlusselement für die erste Fluidleitung ausgebildet, das eine an der ersten Fluidleitung angeordnete elektrische Leitung elektrisch kontaktiert und mit dem Steckverbinder der mindestens einen Steckverbinderanordnung verbindet. Auf diese Weise ist ein Heizdraht eines elektrisch beheizten Schlauchs über den elektrischen Steckverbinder der erfindungsgemäßen Fluidkupplungsanordnung kontaktiert.

Um von Fertigungstoleranzen unabhängig zu werden und flexibel auf verschiedenste geometrische Einbaulagen im Kraftfahrzeug reagieren zu können, kann das erste Kupplungsteil drehbar an der ersten Fluidleitung angeordnet sein und die mindestens eine erste elektrische Leitung kann einen axial um die Fluidleitung umlaufenden Schleifring aufweisen, der von Kontaktelementen eines Steckverbinders der mindestens einen Steckverbinderanordnung kontaktiert ist. Auf diese Weise kann auch verhindert werden, dass durch mechanische Beanspruchung der Kontaktierung der elektrischen Leitung beim Einbau oder Betrieb des Kraftfahrzeugs der elektrische Kontakt unterbrochen wird.

Um zu verhindern, dass zwar die Schlauchleitungen eisfrei sind, aber bei niedrigen Temperaturen Eisansätze in der Fluidkupplungsanordnung auftreten, kann gemäß einer vorteilhaften Weiterbildung das erste Kupplungsteil und/oder das zweite Kupplungsteil elektrisch beheizbar ausgeführt sein. Auf diese Weise kann sichergestellt werden, dass das gesamte Fluidverteilungssystem eisfrei bleibt.

Anhand der in den beiliegenden Zeichnungen dargestellten Ausgestaltungen wird die Erfindung im Folgenden näher erläutert. Ähnliche oder korrespondierende Einzelheiten der erfindungsgemäßen Fluidkupplungsanordnung sind in den Figuren mit denselben Bezugszeichen versehen. Es zeigen:
- Fig. 1: ein Blockschaltbild eines Fluidverteilungssystems gemäß der vorliegenden Erfindung;
- Fig. 2: eine perspektivische Darstellung einer Fluidkupplungsanordnung gemäß einer ersten vorteilhaften Ausführungsform in ihrer Applikationsumgebung;
- Fig. 3: eine perspektivische Darstellung einer ersten Fluidleitung gemäß einer weiteren vorteilhaften Ausführungsform;
- Fig. 4: eine gedrehte perspektivische Darstellung der Anordnung aus Fig. 3;
- Fig. 5: eine perspektivische Darstellung eines ersten Kupplungsteils und einer ersten Fluidleitung gemäß einer weiteren vorteilhaften Ausführungsform;
- Fig. 6: eine gedrehte perspektivische Darstellung der Anordnung aus Fig. 5;
- Fig. 7: eine schematische Schnittdarstellung durch ein erstes Kupplungsteil gemäß einer weiteren vorteilhaften Ausführungsform;
- Fig. 8: eine perspektivische Darstellung einer Fluidkupplungsanordnung gemäß einer weiteren vorteilhaften Ausführungsform;
- Fig. 9: ein Fluidverteilungssystem gemäß einer weiteren vorteilhaften Ausführungsform.

Fig. 1 zeigt ein Fluidverteilungssystem 100, wie es in einem Kraftfahrzeug einsetzbar ist, in einer schematischen Darstellungsweise. Dabei werden beheizbare Komponenten 102, 104 über Fluidleitungen 106 mit einem Fluid versorgt bzw. durchströmt. Bei dem Fluid kann es sich sowohl um eine Flüssigkeit wie auch um ein Gas, beispielsweise um Wasser für die Scheibenreinigung oder um eine wässrige Harnstofflösung, wie sie zur Reduzierung der Stickoxyde im SCR-Verfahren verwendet wird, handeln. Das sogenannte SCR-Verfahren (selectiv catalytic reduction: selektive katalytische Reduktion) bezeichnet ein Verfahren, bei dem die Stickoxide in einem Katalysator unter Beteiligung eines geeigneten Reduktionsmittels chemisch in Stickstoff und Wasser umgesetzt werden. Als Reduktionsmittel wird häufig dampf- oder gasförmiger Ammoniak verwendet, der durch Verdampfung, nachfolgende Thermolyse und Hydrolyse aus Harnstoff oder einer Harnstofflösung erzeugt und in den Abgasstrom eingebracht wird. Eine solche Harnstofflösung muss dann in entsprechenden Tanks mitgeführt über die Fluidförderkette weiterbefördert und dem Katalysator als Verbraucher zugeführt werden. Weiterhin kann als Fluid auch ein Gas, wie beispielsweise das Blowbygas in einem Verbrennungsmotor, betrachtet werden.

Um zu verhindern, dass innerhalb des Fluidverteilungssystems 100 bei erniedrigten Temperaturen ein Eisansatz auftritt, sind die Fluidleitungen 106 elektrisch beheizt. . Die Anschlüsse dieser elektrischen Beheizung sind durch die elektrischen Leitungen 108 symbolisiert. Wie in Fig. 1 schematisch dargestellt, erfolgt die Verbindung zwischen zwei beheizten Fluidleitungen über eine als Durchgangsverbinder ausgestaltete Fluidkupplungsanordnung 110.

Erfindungsgemäß weist die Fluidkupplungsanordnung 110 ein erstes Kupplungsteil 112 und ein zweites Kupplungsteil 114 auf. Diese beiden Kupplungsteile wirken zusammen, um eine erste Fluidleitung 116 mit einer zweiten Fluidleitung 118 zu verbinden. Zwischen den beiden Fluidleitungen strömt im verbundenen Zustand das Fluid. Weiterhin weist die Fluidkupplungsanordnung 110 eine elektrische Steckverbinderanordnung 120 auf, mit Hilfe derer die elektrischen Leitungen 122, 124 und 126, 128 miteinander verbunden werden können. Eine Energiequelle 130 versorgt die Anordnung mit elektrischer Energie, die beispielsweise zum Heizen der Schläuche benötigt wird. Dabei ist die gezeigte Batterie 130 nur als beispielhafte Lösung zu sehen. Die Spannungsversorgung kann auch mit geeigneten Schaltelementen und Absicherungen versehen sein oder über die Motorelektronik gesteuert werden.

In der gezeigten Ausführungsform ist eine Parallelschaltung realisiert; selbstverständlich kann aber auch eine Serienschaltung verwirklicht werden.

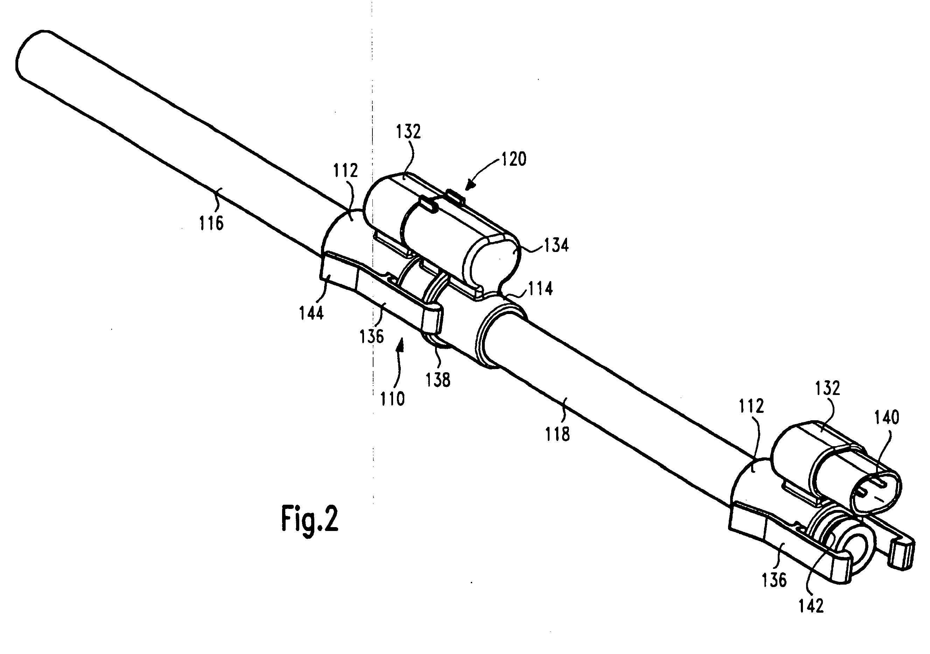

Fig. 2 zeigt in einer perspektivischen Darstellung die Fluidkupplungsanordnung 110 aus Fig. 1 gemäß einer möglichen Ausführungsform. Zu erkennen sind zwei Fluidleitungsstücke 116, 118, die über die Fluidkupplungsanordnung 110 gemäß einer ersten Ausführungsform miteinander verbunden sind, sowie ein erstes Kupplungsteil 112, das steckbereit ist, um entweder mit einem weiteren Leitungsstück oder beispielsweise mit dem Anschluss einer Pumpe verbunden zu werden.

Erfindungsgemäß ist an der Fluidkupplungsanordnung 110 zusätzlich eine elektrische Steckverbinderanordnung 120, bestehend aus einem Steckverbinder 132 und einem Gegensteckverbinder 134, vorgesehen, um gleichzeitig mit der fluidischen Kupplung auch eine elektrische Verbindung herstellen zu können. Sowohl der Steckverbinder 132 wie auch der Gegensteckverbinder 134 sind im Inneren der jeweiligen ersten und zweiten Kupplungsteile 112, 114 mit elektrischen Leitungen verbunden, die an den Fluidleitungen 116, 118 entlanggeführt sind (in der Abbildung nicht dargestellt).

Zwei Rastarme 136, die an dem Kupplungsteil 112 angeformt sind, wirken mit einem Rastvorsprung 138 zusammen, der an dem Kupplungsteil 114 vorgesehen ist. Wie aus Fig. 2 erkennbar, ist der dem ersten Kupplungsteil 112 zugeordnete Steckverbinder 132 mit Steckerstiften 140 versehen, und der Gegensteckverbinder 134 ist entsprechend als Steckerbuchse ausgeführt. Selbstverständlich liegt es aber im Belieben des Fachmannes, Steckerstifte und Buchsen entsprechend zu vertauschen. Weiterhin kann eine beliebige Anzahl und Ausgestaltung von Steckerstiften bei der Steckverbindung 120 verwendet werden.

Fachübliche Dichtvorrichtungen 142 sind an dem ersten Kupplungsteil 112 angeordnet, um ein Austreten des Fluids an der Fluidkupplungsanordnung 110 zu verhindern. Weiterhin kann selbstverständlich auch die Steckverbindung 120 durch fachübliche Maßnahmen gegenüber einem Eindringen von Feuchtigkeit abgedichtet sein.

Aus dieser Darstellung wird darüber hinaus deutlich, dass die Rastarme 136 Betätigungselemente 144 aufweisen, mit Hilfe derer die Rastverbindung leicht gelöst werden kann, wenn die Fluidkupplung getrennt werden soll.

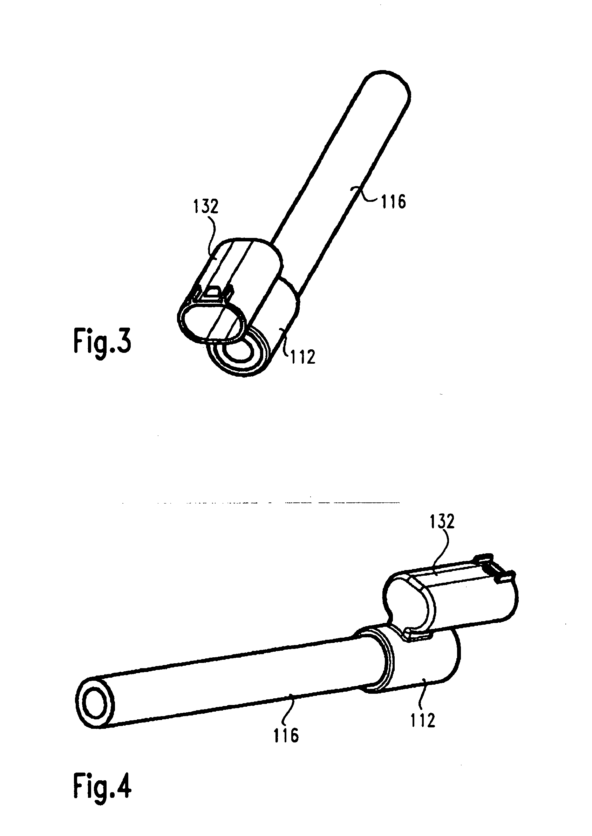

Eine weitere Ausführungsform eines ersten Kupplungsteils 112, wie es an einer Fluidleitung 116 montiert ist, ist in den Figuren 3 und 4 gezeigt. Im Unterschied zu der Ausführungsform aus den Figuren 2 und 3 befindet sich die Rastvorrichtung hier an dem Steckverbinder 132. In der hier gezeigten Darstellung sind der zugehörige Rastarm und der Steckverbinder 134 allerdings nicht gezeigt. Diese Ausführungsform hat den Vorteil, dass insbesondere die gegenüber Erschütterungen empfindliche elektrische Verbindung gesichert ist, während die festgepresste Fluidverbindung in axialer Richtung ohne zusätzliche Sicherung fixiert bleibt.

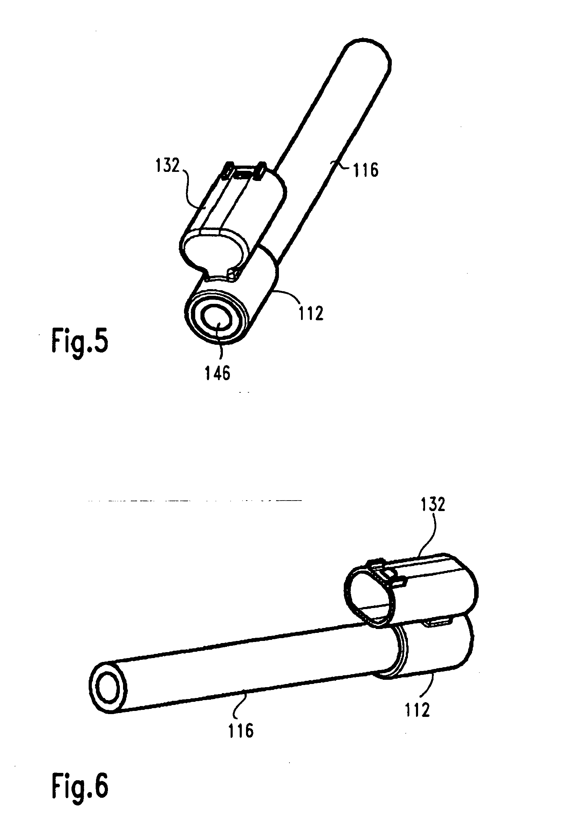

Mit Bezug auf die Figuren 5 und 6 wird eine weitere vorteilhafte Ausführungsform eines ersten Kupplungsteils 112 mit einem daran angeformten Steckverbinder 132 erläutert. Hier ist das Steckergesicht des Steckverbinders 132 von der Fluideintrittsöffnung 146 abgewandt. Diese Lösung hat den Vorteil, dass eine in dem Schlauch 116 integrierte elektrische Heizvorrichtung mit dem Steckverbinder 132 verbunden werden kann und mittels eines losen, hier nicht dargestellten Gegensteckverbinders 134 elektrisch kontaktiert werden kann.

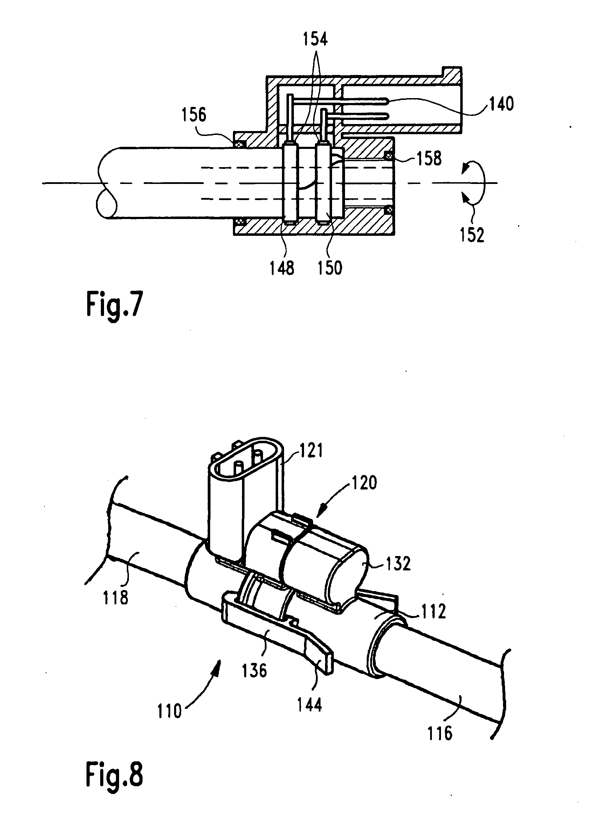

Grundsätzlich besteht bei der elektrischen Kontaktierung einer Fluidleitung stets das Problem, dass punktuelle Kontakte durch Verdrehen des Kupplungsteils 112, 114 abgebrochen werden können. Deshalb kann, wie in Fig. 7 in einem schematischen Schnitt dargestellt, die Kontaktierung des Schlauchs über Schleifringe 148, 150 erfolgen und die gesamte Fluidkupplungsanordnung kann mit Bezug auf die jeweiligen Fluidleitungen drehbar ausgestaltet sein. Die Drehbarkeit um die Längsachse der Fluidkupplungsanordnung ist in Fig. 12 durch den Richtungspfeil 152 symbolisiert.

Die Steckerstifte 140 werden mit den Schleifringen 148, 150 über federnde Kontakte 154 elektrisch verbunden. Dichtungen 156, 158 verhindern das Eindringen von Feuchtigkeit in die elektrische Steckverbindung.

Eine weitere vorteilhafte Ausführungsform der erfindungsgemäßen Fluidkupplungsanordnung 110 ist in Figur 8 gezeigt. Bei den bisherigen Anordnungen wurde stets davon ausgegangen, dass die Energieversorgung an einem Ende des Fluidverteilungssystems angeordnet ist. Je nach Lage des Kabelbaums in einem Kraftfahrzeug kann es jedoch auch sinnvoll sein, an beliebiger Stelle innerhalb des Fluidverteilungssystems die benötigte Energie einzuspeisen. Hierfür kann der Steckverbinder 120 zusätzlich einen Versorgungsstecker 121 zum Anschließen einer Versorgungsspannung aufweisen. Damit kann in vorteilhafter Weise die Flexibilität des Fluidfördersystems wesentlich erhöht werden.

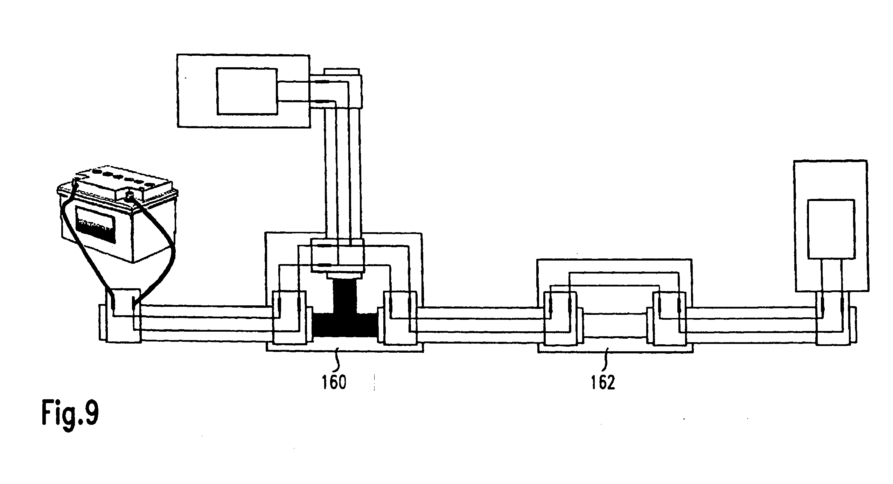

Wie mit Bezug auf Fig. 9 näher erläutert werden soll, kann ein Fluidverteilungssystem zum Einsatz in einem Kraftfahrzeug die verschiedensten Ausformungen einer Fluidkupplungsanordnung benötigen. So kann beispielsweise ein erstes Kupplungsteil vorgesehen sein, das die Gestalt eines T-Stücks realisiert und das jeweils fluidisch und elektrisch gemäß der erfindungsgemäßen Prinzipien kontaktiert ist. Ein derartiges Verzweigungsstück oder T-Stück ist in Fig. 9 mit dem Bezugszeichen 160 versehen.

Anstelle einer T-förmigen Verzweigung können aber auch beliebige andersartige Fittings unter Verwendung der erfindungsgemäßen Prinzipien realisiert werden: beispielsweise ein Durchgangskupplungsstück (I-Stück) 162 oder ein Winkelstück (L-Stück), das hier nicht gezeigt ist. Anstelle der T-förmigen Verzweigung des Verzweigungsstücks 160 kann selbstverständlich auch eine Y-förmige Kanalstruktur vorgesehen sein. Weiterhin sind auch Verzweigungen für mehr als drei Anschlüsse möglich.

Mit Hilfe der erfindungsgemäßen Prinzipien lassen sich in vorteilhafter Weise insbesondere vollständig integrierte Fluidkupplungsanordnungen realisieren, bei denen gleichzeitig eine fluidische und eine elektrische Verbindung herstellbar ist. Wo dies erforderlich ist, kann selbstverständlich, beispielsweise unter Verwendung der Steckerform aus den Figuren 5 und 6, auch der Anschluss eines losen elektrischen Steckverbinders vorgesehen sein.

Die vorstehend und in den Ansprüchen beschriebenen Merkmale der vorliegenden Erfindung sind sowohl einzeln als auch in verschiedenen Kombinationen vorteilhaft realisierbar. Die Erfindung ist somit nicht auf die beschriebenen Ausführungsbeispiele beschränkt, sondern im Rahmen fachmännischen Könnens in mancherlei Weise abwandelbar.

Insbesondere können die einzelnen Elemente der Fluidkupplungsanordnung beheizbar ausgeführt sein, um Eisansätze überall in dem Fluidverteilungssystem zu verhindern.

## Patentansprüche

1. Fluidkupplungsanordnung für Gase oder Flüssigkeiten, die mindestens ein erstes Kupplungsteil (112) und ein erstes fluidführendes Element (116) aufweist, wobei das erste Kupplungsteil (112) das erste fluidführendes Element (116) und mindestens ein zweites fluidführendes Element (118) der Fluidkupplungsanordnung im Zusammenwirken mit mindestens einem zweiten Kupplungsteil (114) der Fluidkupplungsanordnung verbindet, wobei ein Fluid zwischen dem ersten fluidführenden Element und dem mindestens einen zweiten fluidführenden Element durch die Fluidkupplungsanordnung (110) strömen kann,
wobei die Fluidkupplungsanordnung weiterhin mindestens eine elektrische Steckverbinderanordnung (120) aufweist, die mindestens eine erste elektrische Leitung (122, 124) der Fluidkupplungsanordnung mit mindestens einer zweiten elektrischen Leitung (126, 128) der Fluidkupplungsanordnung verbindet,
mindestens eines der fluidführenden Elemente (116) ein elektrisch durch einen Heizdraht des Schlauchs beheizter Schlauch ist und die mindestens eine erste elektrische Leitung mit dem Heizdraht verbunden ist, wobei
das erste Kupplungsteil (112) sowie ein Steckverbinder (132) der mindestens einen elektrische Steckverbinderanordnung in einem ersten elektrisch isolierenden Gehäuse der Fluidkupplungsanordnung aufgenommen sind, **dadurch gekennzeichnet, dass**
das zweite Kupplungsteil (114) sowie ein Gegensteckverbinder (134) der mindestens einen elektrische Steckverbinderanordnung in einem zweiten elektrisch isolierenden Gehäuse der Fluidkupplungsanordnung aufgenommen sind, wobei das erste und zweite Gehäuse zusammensteckbar sind, um die fluidische und die elektrische Verbindung herzustellen.

2. Fluidkupplungsanordnung nach Anspruch 1, die weiterhin mindestens eine Haltevorrichtung (136, 138) zum mechanischen Sichern der beiden Kupplungsteile aneinander in einem zusammengesteckten Zustand aufweist.

3. Fluidkupplungsanordnung nach Anspruch 2, wobei die Haltevorrichtung durch mindestens einen Rastarm (136) gebildet ist, der an einem der beiden Kupplungsteile angeordnet ist und mit einem an dem anderen Kupplungsteil angeordneten Rastvorsprung (138) verrastbar ist.

4. Fluidkupplungsanordnung nach mindestens einem der vorangegangenen Ansprüche, wobei das erste Kupplungsteil (112) als ein Fitting in Form eines Kupplungsstücks, Winkelstücks, Abzweigstücks oder Vielfachverteilers ausgeführt ist.

5. Fluidkupplungsanordnung nach mindestens einem der vorangegangenen Ansprüche, wobei mindestens an dem ersten Kupplungsteil (112) ein Schlauchanschlusselement ausgebildet ist, das eine an der ersten Fluidleitung angeordnete elektrische Leitung elektrisch kontaktiert und mit einem Steckverbinder (132) der mindestens einen Steckverbinderanordnung verbindet.

6. Fluidkupplungsanordnung nach mindestens einem der vorangegangenen Ansprüche, wobei mindestens das erste Kupplungsteil drehbar an der ersten Fluidleitung angeordnet ist und die mindestens eine erste elektrische Leitung einen axial um die Fluidleitung umlaufenden Schleifring aufweist, der von Kontaktelementen eines Steckverbinders der mindestens einen Steckverbinderanordnung kontaktiert ist.

7. Fluidkupplungsanordnung nach mindestens einem der vorangegangenen Ansprüche, wobei das erste Kupplungsteil und/oder das zweite Kupplungsteil elektrisch beheizbar ausgeführt sind.

8. Fluidkupplungsanordnung nach mindestens einem der vorangegangenen Ansprüche, die angepasst ist, ein flüssiges oder gasförmiges Fluid zu verteilen.

9. Fluidverteilungssystem, vorzugsweise zur Verwendung in einem Kraftfahrzeug mit einer Fluidkupplungsanordnung nach mindestens einem der vorangegangenen Ansprüche.

## Claims

1. A fluid coupling arrangement for gases or liquids that has at least one first coupling part (112) and one first fluid-conveying element (116), the first coupling part (112) connecting the first fluid-conveying element (116) and at least one second fluid-conveying element (118) of the fluid coupling arrangement cooperating with at least one second coupling part (114) of the fluid coupling arrangement, a fluid being able to flow through the fluid coupling arrangement (110) between the first fluid-conveying element and the at least one second fluid-conveying element,
the fluid coupling arrangement further comprising at least one electrical plug connector arrangement (120) that connects at least one first electrical line (122, 124) of the fluid coupling arrangement to at least one second electrical line (126, 128) of the fluid coupling arrangement,
at least one of the fluid-conveying elements (116) being a tube heated electrically by a heating wire of the tube, and the at least one first electrical line being connected to the heating wire,
the first coupling part (112) and a plug connector (132) of the at least one electrical plug connector arrangement being accommodated in a first electrically insulating housing of the fluid coupling arrangement,
**characterised in that** the second coupling part (114) and a counter-plug connector (134) of the at least one electrical plug connector arrangement are accommodated in a second electrically insulating housing of the fluid coupling arrangement, it being possible to plug together the first and the second housing in order to establish the fluidic and the electrical connection.

2. The fluid coupling arrangement according to Claim 1, that further comprises at least one holding apparatus (136, 138) for mechanically securing the two coupling parts to one another in a plugged together state.

3. The fluid coupling arrangement according to Claim 2, the holding apparatus being formed by at least one locking arm (136) that is located on one of the two coupling parts, and which can lock with a locking projection (138) located on the other coupling part.

4. The fluid coupling arrangement according to at least one of the preceding claims, the first coupling part (112) being made as a fitting in the form of a coupling piece, angle piece, branch piece or multiple distributor.

5. The fluid coupling arrangement according to at least one of the preceding claims, a tube connection element being formed at least on the first coupling part (112) which electrically contacts an electrical line located on the first fluid line and connects to a plug connector (132) of the at least one plug connector arrangement.

6. The fluid coupling arrangement according to at least one of the preceding claims, at least the first coupling part being arranged rotatably on the first fluid line, and the at least one first electrical line having a friction ring running axially around the fluid line that is contacted by contact elements of a plug connector of the at least one plug connector arrangement.

7. The fluid coupling arrangement according to at least one of the preceding claims, the first coupling part and/or the second coupling part being designed so that they can be heated electrically.

8. The fluid coupling arrangement according to at least one of the preceding claims, that is adapted to distribute a liquid or gaseous fluid.

9. The fluid distribution system, preferably for use in a motor vehicle, comprising a fluid coupling arrangement according to at least one of the preceding claims.

## Revendications

1. Dispositif de raccordement fluidique pour gaz ou liquides comprenant au moins une première pièce de raccordement (112) et un premier élément conducteur de fluide (116), dans lequel la première pièce de raccordement (112) relie le premier élément conducteur de fluide (116) et au moins un deuxième élément conducteur de fluide (118) du dispositif de raccordement fluidique en conjonction avec au moins une deuxième pièce de raccordement (114) du dispositif de raccordement fluidique, dans lequel un fluide peut circuler à travers le dispositif de raccordement fluidique (110) entre le premier élément conducteur de fluide et l'au moins un deuxième élément conducteur de fluide,
étant entendu que le dispositif de raccordement fluidique comprend également au moins un assemblage de connecteur électrique (120) qui relie au moins une première ligne électrique (122, 124) du dispositif de raccordement fluidique à au moins une deuxième ligne électrique (126, 128) du dispositif de raccordement fluidique ;
au moins l'un des éléments conducteurs de fluide (116) étant un tuyau chauffé par un fil de chauffe du tuyau et l'au moins une première ligne électrique étant reliée au fil de chauffe ; étant entendu que
la première pièce de raccordement (112) ainsi qu'un connecteur (132) de l'au moins un assemblage de connecteur électrique étant contenus dans un premier logement isolant électriquement du dispositif de raccordement fluidique ;
**caractérisé en ce que** la deuxième pièce de raccordement (114) ainsi qu'un connecteur inverse (134) de l'au moins un assemblage de connecteur électrique sont contenus dans un deuxième logement isolant électriquement du dispositif de raccordement fluidique, étant entendu que les premier et deuxième logements peuvent être assemblés pour réaliser la liaison fluidique et électrique.

2. Dispositif de raccordement fluidique selon la revendication 1, comprenant également au moins un dispositif de retenue (136, 138) pour sécuriser mécaniquement les deux pièces de raccordement l'une avec l'autre dans une position assemblée.

3. Dispositif de raccordement fluidique selon la revendication 2, dans lequel le dispositif de retenue est constitué par au moins un bras d'arrêt (136) qui est agencé sur l'une des deux pièces de raccordement et qui peut être enclenché avec une saillie d'arrêt (138) agencée sur l'autre pièce de raccordement.

4. Dispositif de raccordement fluidique selon au moins l'une des revendications précédentes, dans lequel la première pièce de raccordement (112) est réalisée comme un raccord sous la forme d'une pièce de raccordement, d'une pièce coudée, d'une pièce d'embranchement ou d'un distributeur multiple.

5. Dispositif de raccordement fluidique selon au moins l'une des revendications précédentes, dans lequel est formé, au moins sur la première pièce de raccordement (112), un élément de jonction de tuyau qui établit un contact électrique avec une ligne électrique agencée sur la première conduite de fluide et la relie à un connecteur (132) de l'au moins un assemblage de connecteur.

6. Dispositif de raccordement fluidique selon au moins l'une des revendications précédentes, dans lequel au moins la première pièce de raccordement est agencée sur la première conduite de fluide de façon à pouvoir tourner et l'au moins une première ligne électrique présente une bague glissante encerclant la conduite de fluide de façon axiale, avec laquelle un contact est établi par des éléments de contact d'un connecteur de l'au moins un assemblage de connecteur.

7. Dispositif de raccordement fluidique selon au moins l'une des revendications précédentes, dans lequel la première pièce de raccordement et/ou la deuxième pièce de raccordement sont réalisées de façon à pouvoir être chauffées électriquement.

8. Dispositif de raccordement fluidique selon au moins l'une des revendications précédentes, qui est adapté pour distribuer un fluide sous forme liquide ou gazeuse.

9. Système de distribution de fluide, de préférence pour l'utilisation dans un véhicule automobile, comprenant un dispositif de raccordement fluidique selon au moins l'une des revendications précédentes.
